(19) Europäisches Patentamt
European Patent Office
Office européen des brevets

(11) Publication number: **0 272 839 A2**

(12) **EUROPEAN PATENT APPLICATION**

(21) Application number: **87310804.7**

(22) Date of filing: **09.12.87**

(51) Int. Cl.4: **C08K 3/00** , C08K 7/14 , C08L 81/02

(30) Priority: **10.12.86 JP 294107/86**

(43) Date of publication of application: **29.06.88 Bulletin 88/26**

(84) Designated Contracting States: **AT BE CH DE ES FR GB GR IT LI LU NL SE**

(71) Applicant: **KUREHA KAGAKU KOGYO KABUSHIKI KAISHA**
**1-9-11, Nihonbashi, Horidome-cho**
**Chuo-ku Tokyo 103(JP)**

(72) Inventor: **Kouyama, Toshitaka**
**4-2-12, Nakaoka-machi**
**Iwaki-shi Fukushima-ken(JP)**
Inventor: **Egawa, Harunobu**
**20 Idekura Nakoso-machi**
**Iwaki-shi Fukushima-ken(JP)**
Inventor: **Iizuka, Yo**
**1-36-10 Iino Chuodai**
**Iwaki-shi Fukushima-ken(JP)**
Inventor: **Shiiki, Zenya**
**28-1, Ochiai Nishiki-machi**
**Iwaki-shi Fukushima-ken(JP)**

(74) Representative: **Woods, Geoffrey Corlett et al**
**J.A. KEMP & CO. 14 South Square Gray's Inn**
**London WC1R 5EU(GB)**

(54) **Polyarylene thioether composition for use in packaging, as well as molded product prepared therefrom.**

(57) A polyarylene thioether composition, suitable for use in packaging electronic parts, comprises a polyarylene thioether as the main constituent resin and a filler and has the following physical properties:

(a) a melt viscosity (measured at 310°C under a shearing rate = $10^4$/sec) of from 4 to 30 Pas (40 to 300 poise) and not more than 20 ppm of either Na or Cl is extracted therefrom with hot water at 100°C after 20 hours, and

(b) the melt-molded product prepared therefrom has a flexural strength at ambient temperature of not less than $5 \times 10^6$ kg/m$^2$ (5 kg/mm$^2$), a maximum bend at 200°C of not less than $4 \times 10^{3}$ m (4 mm) and a flexural modulus at 200°C from $5 \times 10^7$ to $2.7 \times 10^8$ kg/m$^2$ (50 to 270 kg/mm$^2$).

*Fig.1*

(a) (b)

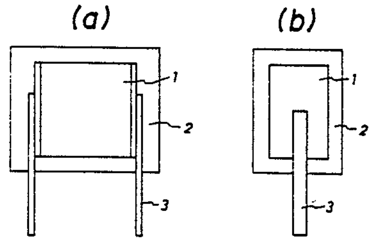


EP 0 272 839 A2

Xerox Copy Centre

# POLYARYLENE THIOETHER COMPOSITION FOR USE IN PACKAGING, AS WELL AS MOLDED PRODUCT PREPARED THEREFROM

The present invention relates to polyarylene thioether compositions for use in packaging electronic parts and to injection-molded products comprising packaged electronic parts.

For electronic parts such as a capacitor, IC, LSI, transistor, diode, et., resin packaging has generally been used with the aim of maintaining electric insulation, protecting mechanical properties and preventing a change of characteristics due to the external atmosphere. While the conventional resin packaging has usually been effected by transfer molding using a thermosetting resin such as epoxy resin, silicone resin, etc., the use of a thermosetting resin involves drawbacks. It takes a long time for molding, storage control must be strict due to the shelf life of the resin and its scraps such as spools and runners can not be recycled. Although it has been attempted to use polyarylene thioether (hereinafter, simply referred to as PATE) in order to overcome such problems, it is difficult to satisfy the following two requirements simultaneously, by the packaging material of PATE alone, that, the resin composition must show high flowing property with no adherence to fabrication machines upon molding fabrication and the packaging material obtained therefrom should have excellent mechanical strength. Accordingly, molded products comprising PATE incorporated with glass fibers, glass beads, silica, etc. as a filler have been proposed (Japanese Patent Publication NO. 56-2790 (1981), and Japanese Patent Application Laid-Open (KOKAI) Nos. 53-22363 (1978),55-22816(1980) and 56-81953(1981).

However, when a filler, for example, glass fibers, are mixed in an amount sufficient to obtain a required mechanical strength, the melt viscosity of PATE composition is remarkably increased and the molded PATE product shows upon packaging capacitors, IC devices, etc., the following drawbacks:

(1) "dislocation or "displacement" of devices,

(2) displacement or detachment of bonding wires, and

(3) not few crackings in the outer walls of the packaged electronic parts upon heating up to 260°C for 10 seconds, that is lack of solder-resistance.

In order to overcome such drawbacks in the conventional packaging material, the use of potassium titanate fibers which are specific fibrous reinforcing agent finer and shorter than the conventional fillers have been proposed (Japanese Patent Application Laid-Open (KOKAI) Nos. 59-20,910 (1984), 59-20,911 (1984) and 59-215,353 (1984)). However, potassium titanate fibers used in them were 0.2 to 0.5 µm in average diameter. However, the composition of PATE packaging materials sufficiently filled with the potassium titanate fibers of such a fine size adhers to the screw and the cylinder and rotates therewith in one body upon melt processing making, the melt-molding impossible due to abnormally high adhering property, while , if the amount of potassium titanate fibers filled is decreased in order to avoid this problem, it becomes difficult to obtain a packaging material having sufficient mechanical strength. Besides, calcium silicate fibers (Wollastonite) used as fillers in Japanese Patent Application Laid-Open (KOKAI) Nos. 59-20,910 (1984) and 59-20,911 (1984) have fiber diameter of 1 to 3 µm and fiber length of about 20 µm and, in view of their shape, they have been expected to be a satisfactory filler for the packaging material. However, no substantial effect for improving the mechanical strength of the packaging material has not been attained due to shortage of the strength of the fiber itself.

As to PATE for packaging material compositions, a crosslinked polymer of high melt viscosity has been in the example of Japanese Patent Application Laid-Open (KOKAI) NO. 59-215,353 (1984). Use of the crosslinked polymer of such high melt viscosity, however, tends to cause "dislocation" of device or deformation or detachment of the bonding wire upon packaging or increase the viscosity upon molding, and the obtained packaged material is extremely fragile mechanically.

To overcome the foregoing problems regarding fillers and PATE, the present inventors have made an extensive study, and eventually, have developed a molded product in which potassium titanate fibers have specifically a diameter of greater than about 1 µm are incorporated into an uncured linear PATE and found that its molded product shows high flowing propery upon molding fabrication, does not adhere to a fabrication machine and has mechanical strength equivalent to that of the packaging material made of a conventional thermosetting resin (EP-A-0244188).

However, the method has a serious economical problem that expensive special fibrous reinforcing material, ie., potassium titanate fiber, has to be used in an amount as much as 110 to 150 parts by weight based on 100 parts by weight of PATE. Furthermore, since the melt viscosity of the composition tends to be increased and the range for the injection molding condition is relatively narrow, the molding operation often falls outside the condition, which tends to cause device "dislocation", wire detachment and cracking to the outer wall of a device.

The present inventors have extensively sought for a method of easily and economically producing by usual fibrous reinforcing material those packaged molded products particularly, chip type packaged molded products neither causing device "dislocation", wire detachment and deformation upon molding, nor causing cracking in the outer wall of the device upon dipping into a solder bath during the chip working process, and finally have attained the present invention.

In the present invention, the foregoing problems have been overcome by using an outer wall enhanced flexibility in contrast to a conventional rigid outer wall. That is, the packaged molded product already developed by the present inventors (EP-A-0244188) has been designed based on the idea of increasing the rigidity of the outer wall at high temperature by using a composition filled with a great amount of special fibrous reinforcing material to prevent cracking in the outer wall of a device upon dipping it into a solder bath during the chip working process, suppressing the deformation caused by heat expansion of packaged device. Besides, based on similar design idea, chip type electronic parts using rigid outer wall having flexural modulus at 200°C of not less than 300 kg/mm$^2$ have been reported (Japanese Patent Application Laid-Open (KOKAI) Nos.61-102,019 (1986), 610-102,020 (1986), 61-102,021 (1986) 61-102,022(1986), etc.). As has been described, however, these methods involve problems in respect to fabrication and the economical point of view. In the efforts to solve the problem, the present inventors, reversing the way of thinking, have found that it is possible to prepare a packaged molded product with no cracking in the outer wall upon dipping it into a solder bath by using a wall material of high flexibility at high temperature so that it can transform itself conforming with the deformation due to heat expansion, etc., of the device packed..

It is an object of the present invention to provide a PATE composition, for use in packaging, comprising PATE as a main constituent resin and containing fillers, the composition, of which melt viscosity (value measured at 310°C, under shearing rate = 10$^4$/sec is within a range of 40 to 300 poise, each of the extraction amount of Na and Cl when extracted with hot water at 100°C for 20 hours is not more than 20 ppm, and of which melt molded product has the flexural strength (at normal temperature) of not less than 5 kg/mm$^2$, the maximum bend (at 200°C) of not less than 4 mm, the flexural modulus (at 200°C) within a range of 50 to 270 kg/mm$^2$.

Another object of the present invention is to provide a PATE composition, for use in packaging, comprising 100 parts by weight of a PATE, having a melt viscosity (value measured at 310°C, under shearing rate = 10$^4$/sec) of 10 to 200 poise, each of the extraction amount of Na and Cl when extracted with hot water at 160°C for 20 hours of not more than 20 ppm, and 10 to 100 parts by weight of fibrous filler with fiber diameter of 1.1 to 12 $\mu$m, and also having the above-mentioned physical properties.

A further object of the present invention is to provide a molded product as a packaged electronic part,particularly, molded product as a chip type electronic parts, among all, a chip type capacitor, prepared by using the above-mentioned PATE composition for packaging, and molded by injection molding and having a flexible outer cover.

## BRIEF EXPLANATION OF THE DRAWINGS;

Figure 1 is a schematic explanatory drawings for a properly packaged capacitor device, in which

Figure 1(a) is a front elevational view; and

Figure 1(b) is a side elevational view.

Figure 2 is a front elevational view, corresponding to Figure 1(a), for illustrating a capacitor device not packaged properly.

Figure 3 is a front elevational view, corresponding to Figure 1(a), for illustrating a capacitor device in which a lead wire is detached therefrom.

In the drawings, 1 means a device, 2 means a cover made of packaging resin and 3 means a lead wire.

The PATE composition for packaging according to the present invention has features in that it comprises PATE as the main constituent resin, contains fillers and has the following physical properties.

(a) Melt viscosity (value measured at 310°C, under shear rate = 10$^4$/sec) is within a range of 40 to 300 poise, and each of the extraction amount for Na and Cl when extracted with hot water at 100°C for 20 hours is not more than 20 ppm.

(b) The melt molded product has the flexural strength at ambient temperature of not less than 5kg/mm$^2$, the maximum bend at 200°C of not less than 4 mm and the flexural modulus within a range of 50 to 270 kg/mm$^2$.

The present invention also relates to the use of the PATE composition for packaging and the features thereof lie in obtaining a molded product of packaged electronic part having flexible outer wall; causing no

device "dislocation", wire detachment and deformation upon molding and further, causing no cracking in the outer wall upon dipping it in a solder bath; using the composition for packaging described below by way of injection molding.

Composition for Packaging

The PATE composition for packaging is comprising a PATE as the main constituent resin, containing a filler and having the following physical properties.

(a) Melt viscosity (value measured at 310°C, under shearing rate = $10^4$/sec) to be within a range of 40 to 300 poise, and each of the extraction amount for Na and Cl when extracted with hot water at 100°C for 20 hours is of not more than 20 ppm.

(b) The melt molded product has the flexural strength at ambient temperature of not less than 5kg/mm$^2$, the maximum bend at 200°C of not less than 4 mm and the flexural modulus within a range of 50 to 270 kg/mm$^2$.

The composition according to the present invention can satisfy the requirements, that are, (1) having extremely low melt viscosity so as not to cause device "dislocation", wire detachment and wire deformation upon mold, (2) having low electrolyte impurity content so as not to cause functional degradation in a packaged device, (3) being so strong that the molded product packaged may not be damaged during the terminal bending step and (4) having high flexibility when molded so as not to cause cracking in the outer wall upon dipping into a solder bath.

Namely, the PATE composition according to the present invention comprises a PATE as the main constituent resin, contains a filler and has the following properties (a) and (b). The property (a) is derived from the PATE itself, while the property (b) is derived from the composition blended with a filler, particularly, with a fibrous filler.

(a) The composition according to the present invention has, at first, a melt viscosity (value measured at 310°C, under shearing rate = $10^4$/sec: hereinafter, the melt viscosity in the present invention represents the value measured under this condition) within a range of 40 to 300 poise, preferably, within a range of 60 to 250 poise. A composition with the melt viscosity in excess of 300 poise is not preferable since device "dislocation", wire bonding detachment and deformation may probably be caused upon molding. On the other hand, a composition with the melt viscosity of lower than 40 poise is not preferred since the filler and the PATE may probably be separated from each other.

Further, the composition of the present invention shows Na extraction amount of not more than 20 ppm and Cl extraction amount of not more than 20 ppm when extracted with hot water at 100°C for 20 hours.

If the value exceeds 20 ppm, it may unfavorably cause aging degradation for the functions as a device, corrosion of wire or terminal, etc.

(b) The melt molded product of the composition of the present invention has a flexural strength at ambient temperature of not less than 5 kg/mm$^2$, preferably, not less than 6 kg/mm$^2$. If the flexural strength is less than 5 kg/mm$^2$, a breakage may probably be caused in the step of bending terminals of the molded product packaged.

Furthermore, the composition of the present invention, in the form of melt molded product, has the maximum bend at 200°C of not less than 4 mm, more preferably, not less than 5 mm, the flexural modulus at 200°C within a range of 50 to 270 kg/mm$^2$, more preferably, within a range of 100 to 250 kg/mm$^2$.

If the maximum bend is less than 4 mm, it can not conform with the heat expansion of an internal device upon dipping into a solder bath and probably causing cracking in the outer wall. In the same way, if the flexural modulus exceeds 270 kg/mm$^2$, cracking may also be caused in the outer wall by the same reason. If the flexural modulus is less than 50 kg/mm$^2$, the molded product packaged probably cause heat deformation upon dipping into a solder bath.

By the way, most of conventional packaging compositions have large flexural modulus (more than about 400 kg/mm$^2$) and small flexural bend (less than about 3 mm), both measured at 200°C,.

Preferred concrete examples of the packaging composition having the physical properties according to the present invention are those comprising (1) PATE having appropriate melt viscosity and extremely low ionic impurity and (2) fibrous filler of adequate property in an adequate ratio.

PATE

In the present invention, PATE means a polymer having a repeating unit of -( Ar-S )- (Ar: arylene group) as the constituent and the PATE preferably used in the present invention has the p-phenylene group

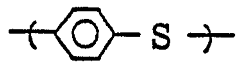

as the main constituent. In this text, "as the main constituent" means that it comprises the p-phenylene unit by not less than 60 mol% and, preferably, not less than 75 mol% based on the entire arylene group in the PATE.

Those having the p-phenylene group as the main constituent of the arylene group are preferred in respect to the physical properties such as heat resistance, moldability and mechanical properties.

Those arylene groups other than the p-phenylene group, the main constituent, usable herein can include, for example, those groups having m-phenylene group

( 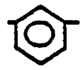 ), o-phenylene group ( 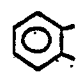 ),

alkyl-substituted phenylene group

( 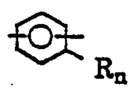 )

in which R is an alkyl group, preferably, a lower alkyl group and n is an integer from 1 to 4, p,p'-diphenylenesulfone group

( 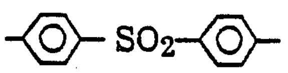 )

p,p'-biphenylene group

( 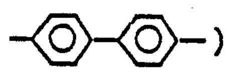 ),

p,p'-diphenylene ether group

( 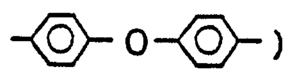 ),

p,p-diphenylene carbonyl group

( 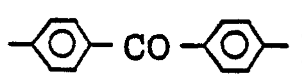 ), naphthalene group ( 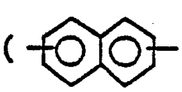 ).

From the viewpoint of the processability, copolymers containing different kind of repeating units are excellent in most cases than homopolymers consisting only of the repeating units of

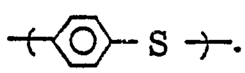.

As the copolymer, a copolymer of

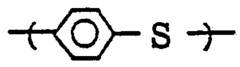 and 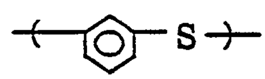

is preferred. Particularly, those containing the respective repeating units in a block form, (for example, as described in European Patent Application (LAID-OPEN) No. 166,451 (1986)), is preferred to those containing them in a random form, because use of the block-copolymer gives remarkably excellent molded product in physical properties, such as, heat resistance, mechanical properties, etc., while they are substantially equal in the processability. It is preferable that an amount of the repeating unit of

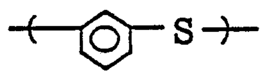

contained in the block copolymer is 5 to 40 mol%, particularly, 10 to 25 mol%.

As the PATE in the present invention, those having substantially linear structure are preferred in respect to the processability and the physical property. However, crosslinked product obtained by using a small amount of crosslinking agent (for example 1,2,4-trihalobenzene) upon polymerization within a range not impairing the processability and the physical properties may also be used.

Although cured PATEs can be used as a polymer in the present invention, uncured PATEs are more preferable.

Since cured PATEs contain many branched or crosslinked structures, their use involve various problems in respect to physical properties of the molded products and a processability of the composition such as poor mechanical strength, severe discoloration and low heat stability upon melt processing.

PATE with the melting point higher than 250°C is preferable for the present invention. If the melting point is lower than 250°C, the major feature as a heat resistant polymer is impaired.

The preferred PATE for the present invention has the melt viscosity within a range of 10 to 200 poise, more preferably, 20 to 150 poise. Those having the melt viscosity of lower than 10 poise are not preferable since separation between a filler and a PATE in the composition may easily be caused upon molding. While on the other hand, those having the melt viscosity in excess of 200 poise are not preferable since the melt viscosity of the composition is increased upon molding and probably cause device "dislocation", wire deformation, etc. in packaged product.

The composition according to the present invention comprises such a PATE described here as the main constituent resin. The expression, "main constituent resin", herein means that the resin ingredient in the composition is mainly composed of PATE and maintains preferred property derived from this specific PATE.

Further, PATE preferred for the present invention shows the extraction amounts for NA and Cl when extracted with hot water at 160°C for 20 hours are respectively not more than 20 ppm, preferably, not more than 10 ppm. If the extraction amount exceeds 20 ppm, it is not preferable since the degradation of the function probably caused to packaged electronic parts.

The PATE capable of satisfying the requirements as described herein can be manufactured with an economical advantage by the process as described in US Patent No. 4,645,826 filed by the present inventors.

## Filler

### (i) Fibrous Filler

As the fibrous filler for the packaging composition according to the present invention, fibers or whiskers,for example, of glass, silica, alumina, zirconia, potassium titanate, calcium silicate, calcium sulfate and aramide can be used. Among them, glass fibers are most preferable in respect to the physical properties and from the economical point of view.

Appropriate fiber diameter for the present invention is 1.1 to 12 µm, preferably, 1.1 to 10µm. Fiber diameter in excess of 12 µm is not preferable since it probably cause device "dislocation", wire (including lead wire) deformation, etc. Further, fiber diameter of not more than 1.1 µm is not preferable since adhesion of the composition to a screw or cylinder of a molding machine may occur thereby bringing a difficulty into the molding fabrication for packaged product.

(ii) Inorganic Filler

As the inorganic filler for the packaging composition according to the present invention, the minor amount of powder, for example, of talc, mica, kaoline, clay, magnesium phosphate, magnesium carbonate, calcium carbonate, calcium silicate, calcium sulfate, silicon oxide, alminum oxide, titanium oxide, chromium oxide, iron oxide, copper oxide, zinc oxide, boron nitride, molybdenum disulfide can be used.

Composition Ratio

A preferred composition ratio for the packaging composition according to the present invention is within a range of 10 to 100 parts by weight, more preferably, 20 to 80 parts by weight, of a fibrous filler based 100 parts by weight of PATE. The ratio of the filler in excess of 100 parts by weight is not preferable since the bend at high temperature is decreased and the flexural modulus is increased thereby increasing the possibility of cracking in the outer wall upon dipping it into a solder bath. On the other hand, the composition ratio of not more than 10 parts by weight is not preferable since the flexural strength at ambient temperature is decreased thereby probably causing damage during the terminal bending step.

As ingredients in the packaging composition according to the present invention, there can be used, in addition to the PATE and the fibrous filler, the following synthetic resin, elastomer or other auxiliary agents in a small amount of such a range as not impairing the purpose of the packaging composition according to the present invention.

Synthetic Resin and Elastomer

As a synthetic resin and an elastomer for the packaging composition according to the present invention, a small amount of synthetic resin, for example, polyolefin, polyester, polyamide, polyimide, polyether imide, polycarbonate, polyphenylene ether, polysulfon, polyether sulfon, polyether ether ketone, polyether ketone, polyarylene, polyacetal, polytetrafluoroethylene, polyvinylidene fluoride, polystyrene, ABS, epoxy resin, silicone resin, phenol resin and urethane resin, or elastomer, for example, polyolefin rubber, fluororubber and silicone rubber can be used.

Other Auxiliary Agent

As other auxiliary agent in the packaging composition according to the present invention, there can be added in a small amount of auxiliary agent such as antioxidant, heat stabilizer, light stabilizer, anti-rust agent, coupling agent, releasing agent, lubricant, colorant, flame retardant, foaming agent and antistatic agent.

Preparation of the Composition

For preparing the packaging PATE composition according to the present invention, the PATE and the filler is mixed, preferably, by means of melt kneading using an extruder or the like.

Molded Product

The packaging PATE composition according to the present invention can be used for preparing, by means of injection molding, a molded product having outer walls enhanced flexibility, for example, chip type electronic parts, by packaging electronic parts, such as, capacitor device, IC device, LSI device, transistor device and diode device,. Particularly, the composition according to the present invention is suitable to package a capacitor device.

Experimental Example

Synthesis Experimental Example 1

Into a titanium-line autoclave, 424 kg of hydrous sodium sulfide (solid content: 46.04%) and 975 kg of N-methylpyrrolidone (hereinafter simply referred to as NMP) were charged and temperature was elevated to about 203°C, to distill out water.

Then, 367 kg of p-dichlorobenzene was charged and they were reacted at 220°C for 5 hours.

The reaction mixture was diluted with water and filtered and only the polymer was separated and washed with acetone and then with water to obtain a cleaned polymer.

The cleaned polymer was immersed in an aqueous 2% $NH_4Cl$ solution, treated at 40°C for 30 minutes, washed with water and dried at 80°C under a reduced pressure to obtain a polymer A. The melt viscosity of the polymer A (temperature at 310°C, sharing rate = 10,000 $sec^{-1}$) was 7 poise.

Synthesis Experimental Example 2

Into a titanium-lined autoclave, 373 kg of hydrous sodium sulfide (solid content: 46.03%) and 1,070 kg of NMP were charged and temperature was elevated to about 203°C, to distill out water.

347 kg of p-dichlorobenzene was charged.

After reacting at 220°C for 5 hours, 77 kg of water was additionally charged and the polymerization reaction was performed at 258°C for 3 hours.

The reaction mixture was sieved through a 0.1 mm mesh screen and only the polymer was separated, washed with acetone and then with water to obtain a cleaned polymer.

The cleaned polymer was immersed in an aqueous 2% $NH_4Cl$ solution, treated at 40°C for 30 minutes, washed with water and dried at 80°C under a reduced pressure to obtain a polymer B. The melt viscosity of the polymer B (temperature at 310°C, shearing rate = 10,000 $sec^{-1}$) was 100 poise. A portion of the cleaned polymer was washed with water and dried under a reduced pressure, without treating with the aqueous $NH_4Cl$ solution, to obtain a polymer C. The melt viscosity was 130 poise.

Synthesis Experimental Example 3

Into a titanium-lined autoclave, 423 kg of hydrous sodium sulfide (solid content: 46.11%) and 974 kg of NMP were charged and temperature was elevated to about 203°C, to distill out water.

373 kg of p-dichlorobenzene was then charged.

After reacting at 220°C for 5 hours, 62 kg of water was additionally charged and the polymerization reaction was performed at 254°C for 5 hours.

The reaction mixture was sieved through a 0.1 mm mesh screen and only the polymer was separated, washed with acetone and then with water to obtain a cleaned polymer.

The cleaned polymer was immersed in an aqueous 2% $NH_4Cl$ solution, treated at 40°C for 30 minutes, washed with water and dried at 80°C under a reduced pressure to obtain a polymer D. The melt viscosity of the polymer D (temperature at 310°C, sharing rate = 10,000 $sec^{-1}$) was 310 poise.

Synthesis Experimental Example 4

Into a titanium-line autoclave, 424 kg of hydrous sodium sulfide (solid content: 46.01%) and 926 kg of NMP were charged and temperature was elevated to about 203°C, to distill out water.

409 kg of p-dichlorobenzene was then charged.

After reacting at 220°C for 5 hours, 61 kg of water was additionally charged and polymerization reaction was performed at 260°C for 3 hours.

The reaction mixture was sieved through 0.1 mm mesh screen and only the polymer was separated, washed with acetone and then with water to obtain a cleaned polymer.

The cleaned polymer was immersed in an aqueous 2% $NH_4Cl$ solution, treated at 40°C for 30 minutes, washed with water and dried at 80°C under a reduced pressure to obtain a polymer E. The melt viscosity of the polymer E (temperature at 310°C, sharing rate = 10,000 $sec^{-1}$) was 30 poise.

The melt viscosity for each of the polymers was determined by using a KOKA type flow tester (manufactured by SHIMAZU SEISAKUSHO) at 310°C as the value at shearing rate of 10,000/second. For the extraction test of ionic impurities, 5 g of the polymer sample and 50 ml of deionized water were tightly

sealed in pressure-resistant vessel, heated at 160°C for 20 hours while settling still. After 20 hours of heating, the content was cooled and then filtered to obtain a mother liquid. Na was measured by ICP (Induced Coupled Plasma) emission spectroscopic analysis and Cl was measured by ion chromatography method respectively. The results are collectively shown in Table 1.

## Example 1

### Preparation of Composition

To 100 parts by weight of the obtained PATEs, 0.05 parts by weight of $Ca(OH)_2$ and a predetermined parts by weight of fibrous filler were added, uniformly dry-blended by using a blender, supplied to a twin-screw extruder, melt-kneaded at 310°C and then extruded. The resultant molten lump was coarsely pulverized to obtain respective granular PATE compositions, C1 to C9.

### Physical Properties of Composition

The respective coarse granular compositions C1-C9 were pulverized again and those passing through a 200 mesh screen were collected and the melt viscosity and the extraction amount of ionic impurities of the compositions were measured by the same methods as adopted for the polymer described above. However, the extraction temperature was 100°C. The melt viscosity of the compositions is shown in Tables 1 and 2 and the extraction amount of the composition is shown in Table 1 collectively.

### Bending Tests

Each of the specimens for the bending tests was molded as described above under the conditions shown below by using the coarse granular PATE composition C1-C9.

The bending test was carried out according to JIS K 7203 for flexural modulus at 200°C and for flexural strength at the ambient temperature (23°C), respectively.

The results for each of the tests are shown in Table 2.

#Molding machine : Injection molding machine manufactured by NIHON SEIKOSHO (T-40S)
#Molding condition:
Cylinder temperature: 300 - 325 - 310°C
Temperature of metallic mold : 150°C
Rate of screw rotation : 150 - 200 rpm
Injection pressure : 1100-1200 kg/cm$^2$
Holding pressure : 100-150 kg/cm$^2$
Injection time period: 5 seconds
Size of Specimen: 12.7 mm x 130 mm x 3 mm

### Packaging Test, Terminal Bending Test and Solder-Resistant Test

Using the coarse granular PATE compositions C1 to C9 obtained as described above, heat resistant polyarylene thioether film capacitor devices were packaged under the following conditions to obtain molded products packaged, M1-M9.

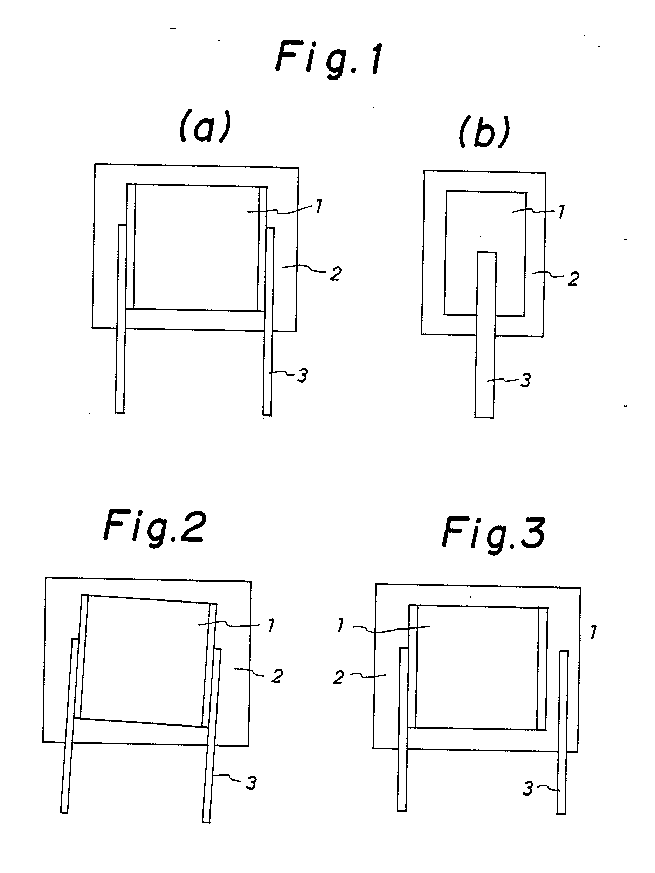

For the packaged products, observation was made by soft X-ray transmission method to judge whether the capacitor devices were properly packaged as shown in Figure 1 or device "dislocation" or lead wire detachment were caused as shown in Figure 2 or Figure 3. The results are shown in Table 2.

#Molding machine : Injection molding machine manufactured by NIHON SEIKOSHO (JT-40S)
#Molding condition
Cylinder temperature : 270-310-310°C
Temperature of metallic mold : 150°C
Rate of screw rotation : 150 rpm
Injection pressure : 750 kg/cm$^2$
Holding pressure : 80 kg/cm$^2$

Injection time period : 5 seconds

Cooling time period : 5 seconds

Further, the molded product obtained, M1 - M9, as described above were checked as to whether electronic parts were damaged or not when terminals were bent along the bottom surface of the electronic parts. The results are shown in Table 2.

Still further, the electronic parts, not damaged by the terminal bending test were further checked whether there were crackings in the outer wall or not when immersed into a solder bath at 260°C for 10 seconds. These results are also shown in Table 2.

Table 1

| Composition No. | Polymer | Fibrous Filler | | Melt viscosity (poise) | Na+ extraction amount (ppm) | $Cl^-$ extraction amount (ppm) |
|---|---|---|---|---|---|---|
| | | Type of Glass Fiber *1) | Amount Mixed *2) | | | |
| | A | - | - | 7 | 7 | 12 |
| - | B | - | - | 100 | 2 | 5 |
| - | C | - | - | 130 | 220 *3) | 30 *3) |
| - | D | - | - | 310 | 3 | 6 |
| - | E | - | - | 30 | 5 | 5 |
| C1 | A | A | 25 | 20 | 9 | 8 |
| C2 | B | A | 25 | 145 | 2 | 4 |
| C3 | C | A | 25 | 170 | 200 *3) | 28 *3) |
| C4 | D | A | 25 | 450 | 3 | 7 |
| C5 | B | B | 25 | 140 | 5 | 8 |
| C6 | B | A | 120 | 470 | 4 | 4 |
| C7 | B | A | 8 | 105 | 3 | 5 |
| C8 | B | A | 20 | 125 | 2 | 3 |
| C9 | B | A | 25 | 60 | 9 | 6 |

**1) Type of Glass Fiber. Glass fiber A: # ECSO3T-717DE/PR, 6 μm diameter, manufactured by NIHON DENKI GLASS Co.*
*Glass fiber B: # ECSO3T-717KR, 13 μm diameter, manufactured by NIHON DENKI GLASS Co.*
**2) Unit: Parts by weight/100 parts by weight of PATE*
**3) Exxcess ionic impurity*

*Table 2*

| Packaged product No. | PATE composition | | Physical property of molded product | | | Damaged ratio of molded products | | | | Remark |
|---|---|---|---|---|---|---|---|---|---|---|
| | No. | Melt viscosity (poise) | Max. bend at 200 °C (mm) | Flexural modulus at 200° C ($kg/mm^2$) | Flexural strength at 23 °C ($kg/mm^2$) | Device dislocation (ratio) | Wire detachment (ratio) | Damage upon terminal bending (ratio) | Cracking in the outer wall (ratio) | |
| M1 | C1 | 20 | 2.0 | 200 | 3.0 | 0 | 0 | 10 | - | Comp. Ex. *1) |
| M2 | C2 | 145 | 6.5 | 170 | 8.9 | 0 | 0 | 0 | 0 | Example |
| M4 | C4 | 450 | 8.2 | 210 | 9.5 | 7 | 3 | 0 | 0 | Comp. Ex. *2) |
| M5 | C5 | 140 | 4.5 | 130 | 7.2 | 5 | 2 | 0 | 0 | Comp. Ex. *3) |
| M6 | C6 | 470 | 3.5 | 470 | 10.0 | 8 | 4 | 0 | 3 | Comp. Ex. *4) |
| M7 | C7 | 105 | 4.2 | 60 | 3.0 | 0 | 0 | 8 | 0 | Comp. Ex. *5) |
| M8 | C8 | 125 | 6.2 | 150 | 8.2 | 0 | 0 | 0 | 0 | Example |
| M9 | C9 | 60 | 2.3 | 250 | 7.8 | 0 | 0 | 0 | 8 | Comp. Ex. *6) |

*1): Melt viscosity of PATE was too low and was caused separation between glass fiber and PATE upon molding. Upon terminal bending, all devices were damaged.
*2): Viscosity in excess of 300 poise.
*3): Glass fiber diameter in excess of 12 μm.
*4): Viscosity in excess of 300 poise, max. bend below 4 mm, flexural modulus in excess of 270 $kg/mm^2$.
*5): Flexural strength below 5 $kg/mm^2$.
*6): Maximum bend below 4 mm.

## Claims

1. A polyarylene thioether composition suitable for use in packaging electronic parts, which composition comprises a polyarylene thioether as the main constituent resin and a filler and has the following physical properties:

(a) a melt viscosity (measured at 310°C under a shearing rate = $10^4$/sec) of from 4 to 30 Pas (40 to 300 poise) and not more than 20 ppm of either Na or Cl is extracted therefrom with hot water at 100°C after 20 hours, and

(b) the melt-molded product prepared therefrom has a flexural strength at ambient temperature of not less than 5 x $10^6$ kg/m$^2$ (5 kg/mm$^2$), a maximum bend at 200°C of not less than 4 x 10 $^3$ m (4 mm) and a flexural modulus at 200°C from 5 x $10^7$ to 2.7 x $10^8$ kg/m$^2$ (50 to 270 kg/mm$^2$).

2. A composition according to claim 1, comprising from 10 to 100 parts by weight of a fibrous filler having a diameter of from 1.1 to 12 x 10 $^6$ m (1.1 to 12 µm) per 100 parts by weight of a polyarylene thioether having a melt viscosity (measured at 310°C under a shearing rate = $10^4$/sec) of from 1 to 20 Pas (10 to 200 poise) and from which not more than 20 ppm of either of Na and Cl is extracted with hot water at 160°C after 20 hours.

3. A composition according to claim 1 or 2, wherein the said filler is glass fibers.

4. A composition according to any one of the preceding claims, comrising from 20 to 80 parts by weight of a fibrous filler having a diameter of from 1.1 to 10 x 10 $^6$ m (1.1 to 10 µm) per 100 parts by weight of the said polyarylene thioether.

5. A composition according to any one of the preceding claims, wherein the polyarylene thioether is a block copolymer comprising the recurring units:

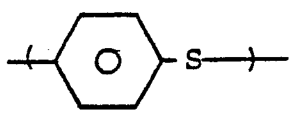

and

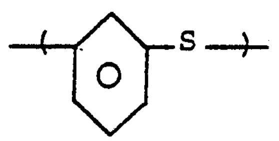

6. A composition according to any one of the preceding claims, having:

(a) a said melt viscosity of form 6 to 25 Pas (60 to 250 poise); and

(b) the melt-molded product prepared therefrom has a said flexural strength of not less than 6 x $10^6$ kg/m$^2$ (6 kg/mm$^2$), a said maximum bend of not less than 5 x 10 $^3$ m (5mm) and a said flexural modulus of from 1 x $10^8$ to 2.5 x $10^8$ kg/m$^2$ (100 to 250 kg/mm$^2$).

7. An injection molded product, with an outer wall enhanced flexibility, composed of an electronic part packaged within a polyarylene thioether composition as claimed in any one of the preceding claims.

8. A product according to claim 7, wherein the electronic part is a chip type electronic part.

9. A product according to claim 7, wherein the electronic part is a chip type capacitor.

10. Use of a polyarylene thioether composition as claimed in any one of claims 1 to 6 in packaging electronic parts.

Fig.1

(a) (b)

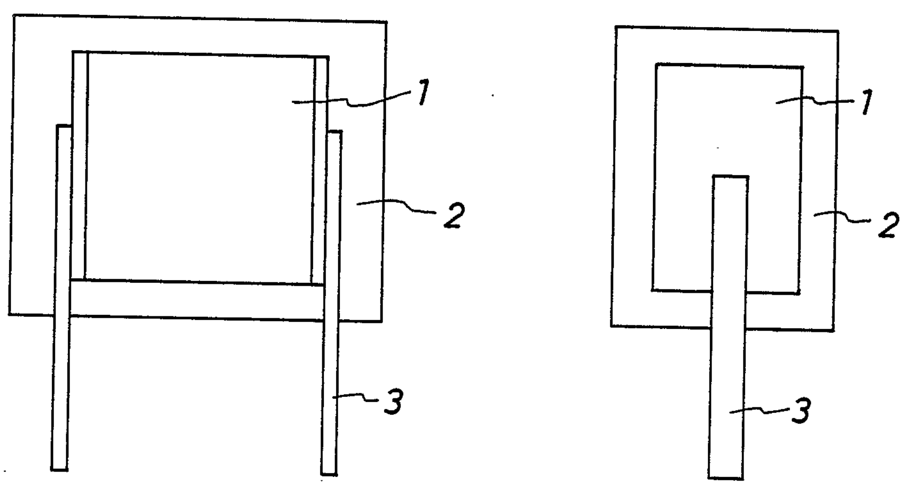


Fig.2

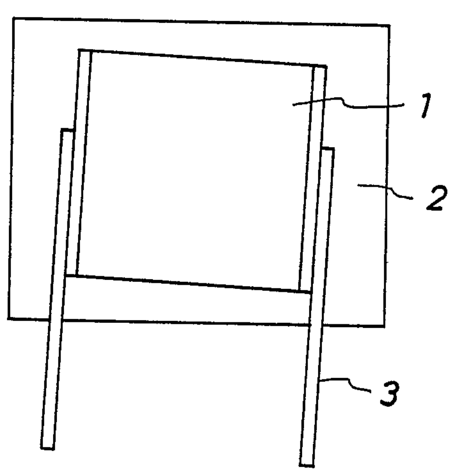


Fig.3